# EUROPEAN PATENT SPECIFICATION

(11) **EP 1 539 487 B1**
(45) Date of publication and mention of the grant of the patent: **24.10.2007**
(21) Application number: 03793220.9
(22) Date of filing: 20.08.2003
(51) Int. Cl.: B32B 17/10, B32B 27/06, B32B 37/16, B32B 38/14

(54) **DECORATIVE LAMINATED SAFETY GLASS**
VERBUNDSICHERHEITSDEKORGLAS
VERRE DE SECURITE FEUILLETE POUR LA DECORATION

(30) Priority: 20.08.2002 US 404700 P
(43) Date of publication of application: 15.06.2005
(73) Proprietor: E. I. du Pont de Nemours and Company, Wilmington, Delaware 19898 (US)
(72) Inventor: ELWAKIL, Hamdy, Hockessin, DE 19707 (US); ROMAN, Ronald, Hockessin, DE 19707 (US); SMITH, Rebecca, L., Vienna, WV 26105 (US); TANG, Chaucer, C., Kennett Square, PA 19348 (US)
(74) Representative: Morf, Jan Stefan
(86) International application number: PCT/US2003/026193
(87) International publication number: WO 2004/018197

(56) References cited:
- WO-A-01/30919
- WO-A-02/18154
- US-A- 6 077 374

## Description

This application claims priority under 35 USC §119 to U.S. Provisional Application No. 60/404,700, filed August 20, 2002, and to U.S. Provisional Application Serial No 60/483,515, filed June 26, 2003.

### BACKGROUND OF THE INVENTION

The present invention relates to decorative laminates bearing images printed on an interlayer by a process of ink jet printing. The present invention particularly relates to decorative laminates wherein the image has been printed onto an interlayer comprising polyvinyl butyral (PVB). The present invention also relates to ink formulations that are useful for preparing the laminates of the present invention.

Decorative laminates are known and obtained by various processes. DE 29706880, U.S. Pat. No. 4,968,553, U.S. Pat. No. 5,914,178, EP 1129844A1, and DE 20100717 disclose making decorative glass laminates via a silk screening process. Silk-screening an image onto an interlayer is a very time-consuming and expensive process for making decorative laminated safety glass. A process for making decorative glass laminates has also been described in U.S. Pat. No. 4,173,672. This patent describes a transfer lamination process wherein an image printed on paper is transferred to a thermoplastic film, and the film bearing the transferred image is then laminated between glass sheets.

Use of "ink jet" technology to print on PVB and polyurethanes using dye based inks for laminated safety glass has been disclosed in WO0218154. Ink jet printing is known and is a conventional process for printing wherein ink droplets are propelled through a printing head at a high speed towards a printing substrate. Ink jet technology is very flexible because any digital image can be printed onto a substrate.

However, a disadvantage of printing directly on PVB using an ink jet printing process is that PVB interlayers have a roughened surface pattern (Rz from 30-60 µm) that can cause poor image quality in a printed image. The roughened surface pattern is necessary in a PVB lamination process to obtain laminates free of air bubbles and other defects caused by the presence of trapped air during the lamination process. However, when ink jet printing onto PVB, the rough surface pattern can effect image quality with respect to mottle and resolution.

Other problems with conventional processes for ink-jet printing are encountered due to the inks used in conventional ink-jet processes. Low viscosity inks are required in a conventional ink jet printing process to alleviate high pressure build-up in the print head of the ink jet printer, and subsequent damage to the head and/or poor quality in the printed image. Ink jet printing is carried out conventionally by either (a) drop on demand (DOD) processes, such as a piezo electric printing or thermal ink jet printing processes, or (b) continuous drop ink jet printing. There are other factors as well that make low viscosity inks necessary and preferable in ink jet printing processes. However, use of conventional inks that are suitable for ink jet printing can result in poor image quality on a thermoplastic interlayer. Poor image quality can be the result when a low viscosity ink is sprayed onto a roughened surface such as a PVB surface that has been prepared for lamination, due to ink running from high points to low spots on the interlayer surface.

Another potential problem with printing an image on an interlayer prior to lamination onto another substrate is that the adhesive bond between the interlayer and the substrate can be significantly weakened due to colorant on the surface of the interlayer that can reduce the "effective" bonding surface area between the substrate and the interlayer. By "effective bonding surface" it is meant to describe that surface area where the interlayer and the substrate are in direct contact with each other without an intervening colorant layer. Reduction of the adhesive force of the laminate can result in the laminate having poor performance as a safety glass, or in the application for which it was intended.

The Applicant has developed a system for ink jet printing on thermoplastic interlayers in such a way that when laminated to a substrate, the laminate maintains its strength and resilience against breakage, while at the same time a quality image is produced on the interlayer printing substrate.

### SUMMARY OF THE INVENTION

In one aspect, the present invention is a process for obtaining a decorative image-bearing laminate having a laminate adhesive strength of at least 6.895 MPa (1000 psi), the process comprising the steps: ink-jet printing a digital image onto at least one surface of a thermoplastic interlayer, and laminating the image-bearing interlayer between two transparent sheets of a suitable lamination substrate.

In another aspect, the present invention is a process for ink jet printing a digital image onto a thermoplastic interlayer sheet, the process comprising the step of jetting either an aqueous or solvent-based pigmented ink onto a roughened interlayer surface, the surface having an R_{z} of from 30 µm to 60 µm and a Frequency of greater than 0.9 cycles/mm, wherein the ink has a viscosity is in the range of 1 to 30 mPas (1-30 cps) and is sufficiently low that it can be jetted through an ink jet printing head without heating the printing head above ambient temperature.

In another aspect, the present invention is a decorative image-bearing laminate comprising at least one sheet of interlayer material bearing an image on at least one surface of the interlayer sheet, wherein the image was printed using an ink jet printing process comprising the step of jetting either an aqueous or solvent-based pigmented ink onto a roughened interlayer surface, the surface having an R_{z} of from 30 µm to 60 µm and a Frequency of greater than 0.9 cycles/mm, wherein the ink has a viscosity that is sufficiently low that it can be jetted through an ink jet printing head without heating the printing head above ambient temperature.

In another aspect, the present invention is a thermoplastic interlayer sheet bearing an image on at least one surface of the interlayer sheet, the image being printed on the sheet by a process comprising the step jetting either an aqueous or solvent-based pigmented ink onto a roughened interlayer surface, the surface having an R_{z} of from 30 µm to 60 µm and a Frequency of greater than 0.9 cycles/mm, wherein the ink has a viscosity that is sufficiently low that it can be jetted through an ink jet printing head without heating the printing head above ambient temperature.

### DETAILED DESCRIPTION OF THE INVENTION

In one embodiment, the present invention is a method for printing an image onto a thermoplastic interlayer material by an ink jet printing process. A suitable thermoplastic interlayer material for the purposes of the present invention can be any conventionally known or commercially available thermoplastic material which is flexible enough yet rigid enough to be passed through an ink jet printer. An interlayer of the present invention can have any thickness which can be accommodated on an ink jet printer, but typical interlayers thickenesses are in a range of from 30 mils to 60 mils. Suitable thermoplastic materials include polyurethane (PUR), ethylene/vinyl acetate copolymers (EVA) and polyvinyl butyral (PVB). Preferred for the purposes of the present invention is PVB. PVB is available commercially from E.I. DuPont de Nemours & Co., under the tradename of Butacite®, for example.

Ink jet printing onto an interlayer material of the present invention is preferably conducted using a pigmented ink. Pigmented inks can provide image quality that is superior to using dyes in the present application. Pigmented inks are preferred because of their color-fastness, thermal stability, edge definition, and low diffusivity on the printed substrate. In conventional practice, the pigment is suspended in a liquid medium that is conventionally referred to as the "vehicle". Pigments suitable for use in the practice of the present invention can be dispersed in either an aqueous or a non-aqueous vehicle. A "non-aqueous" vehicle suitable for use herein can include water in some minor proportion (no greater than 16 wt%) when particular organic solvents are used. It can be preferable in some cases to include an organic solvent or solvents in an aqueous-based vehicle to improve jettability of an ink. Various conventional solvents are known and can be used. Useful, but less preferred, solvents include, for example, methyl isobutyl ketone (MIBK), methyl ethyl ketone (MEK), butyrolactone, and cyclohexanone Suitable solvents include propylene glycol ethers, propylene glycol ether acetates, and ethylene glycol butyl ethers. In a preferred embodiment, dipropylene glycol monomethyl ether acetate (DPMA) is the primary solvent used to disperse the pigmented ink. Mixtures of DPMA with glycol ethers are also preferred.

Whether non-aqueous based, aqueous based, or a mixture of aqueous and non-aqueous based vehicles, inks of the present invention have a viscosity that is sufficiently low that they can be jetted though a printing head of an ink jet printer without the necessity of heating the print head in order to lower the viscosity of the ink. In the practice of the present invention, the ink viscosity is below 30 centipoise (cps), as measured at 25 °C. Preferably the ink viscosity is below 20 cps at 25 °C. More preferably the ink viscosity is below 15 cps, and most preferably below 12 cps at 25 °C.

Without being held to theory, the Applicants believe that problems with image quality using ink jet printing systems can result because ink systems used for jet printing have a much lower viscosity than, for example, inks used in a silk screen printing process. The low viscosity ink can "run" by gravity into the valleys of a roughened PVB surface. The inks, therefore, can form puddles in the low areas on the surface of the PVB, and will not adhere uniformly to the high spots. Therefore, while a low viscosity ink is preferred, the viscosity should not be so low that the image quality is poor in the laminate, or that misting occurs during the printing process. Preferably the ink has a viscosity above 1 cps. For DOD printing processes, the ink preferably has a viscosity above 1.5 cps, more preferably above 1.7, and most preferably above 1.8 cps measured at 25°C. Viscosity of the inks are determined according to DuPont Standard Test Methods.

Preferable inks for use in the practice of the present invention are those that provide printed images having a satisfactory combination of image quality, and light fastness. Further, laminates that incorporate image-bearing interlayers of the present invention should have the adhesion properties described herein. Due to the nature of the polymeric interlayer substrates used herein for printing, and the requirements for adhesion in a safety glass, choice of a suitable ink is not problem free. An ink suitable for use in the practice of the present invention must also be compatible with the substrate to give satisfactory results. It has been discovered that suitable inks for use in the practice of the present invention can be obtained using the pigments selected from the group consisting of:; PY 120; PY 155; PY 128; PY 180; PY 95; PY 93; PV19/PR 202; PR 122; PB 15:4; PB 15:3; and PBI 7. One skilled in the art would know that the designations above are color index numbers for the various pigments. Suitable pigments and ink sets for use in the practice of the present invention are also described in U.S. Provisional Patent Application Serial No. 60/483516, filed June 26, 2003, entitled "Non-Aqueous Inkjet Ink Set".

Weatherability, that is the ability of a pigment or dye to hold its original color after prolonged exposure to the environment, is a key concern for an ink set useful in the practice of the present invention. Weatherability can be assessed by accelerated weathering of color blocks, according to ASTM G90 cycle 2. Weathered samples can be weathered in a range of from 120 KLangley (approximately 1 year of natural exposure) to 1,200 KLangley (approximately 10 years of natural exposure). Suitable pigments for use herein typically have a Delta E (that is, the magnitude of change in the E value) after accelerated weathering of less than or equal to about 8, preferably the Delta E is less than 3.5, more preferably less than 2.5, and most preferably less than 2.0 on samples that have 480 KLangley exposure times. Delta E is determined from L, a*, and b* color measurements according to the following equation:

Delta E = [(Lᵢ - L_{w})² + (a*, - a*_{w})² + (b^{*}ₗ - b^{*}_{w})²]^{1/2}, where Lₗ, a*ₗ, and b^{*}ₗ are initial color measurements and L_{w}, a*_{w}, and b^{*}_{w} are color measurements after weathering. L, a*, and b* are color scale axes that are conventionally used to describe the degree of lightness, i.e. black/white (L), red/green (a*), and blue/yellow (b*) in an image. A Delta E of less than about 10 is suitable in the practice of the present invention. One of ordinary skill in the printing art would know how to interpret the Delta E values presented herein, but for sake of comparison, a Delta E of from about 2 to 5 would be acceptable to an untrained eye without a control for comparison, and a Delta E of less than about 1.5 would not be detectable to the human eye. It has been found in particular that yellow pigments conventionally known for light-fastness and weatherability did not perform as expected in the practice of the present invention, while other pigments gave surprisingly good performance in the practice of the present invention. These unexpected results can, without being held to theory, be ascribed to a synergistic relationship between these unexpectedly superior pigments and the polymeric substrate.

Printing heads useful for piezo electric processes are available from, for example, Epson, Seiko-Epson, Spectra, XAAR and XAAR-Hitachi. Printing heads useful for thermal ink jet printing are available from, for example, Hewlett-Packard and Canon. Printing heads suitable for continuous drop printing are available from Iris and Video Jet, for example.

Optionally included in an ink system of the present invention is a binder resin. A binder resin can be preferable to improve adhesion between the ink and the laminate substrate. Suitable binders for use in the practice of the present invention include polyvinyl pyrrolidone/vinyl acetate (PVPNA), polyvinyl pyrrolidone (PVP), and PUR Mixtures of binder resins can also be useful in the practice of the present invention. Other binders are conventionally known and can be useful herein.

In one embodiment, the inks of the present invention do not include a binder. Typically binders are desirable in order to increase the affinity of an ink to the substrate. However, added binder can increase the viscosity of an ink such that the viscosity is too high for printing according to the process of the present invention. The Applicants have surprisingly discovered that a desirable level of adhesion in a laminate of the present invention can be obtained by use of a preferred solvent together with a pigment, allowing the Applicants to reduce or eliminate the binder in the ink.

Traditionally, pigments are stabilized to dispersion in a vehicle by dispersing agents, such as polymeric dispersants or surfactants. More recently, so-called "self-dispersible" or "self-dispersing" pigments (hereafter "SDPs") have been developed that are suitable for use in the practice of the present invention. SDPs are dispersible in an aqueous vehicle without the use of traditional dispersants. The pigment particles of this invention may be stabilized according to several methods. The pigment particles can be made self-dispersing by a surface treatment as described in, for example, WO01/94476, or the pigment particles can be stabilized by treatment with dispersant in the traditional way, or the pigments can be dispersed by some combination of surface treatment and traditional treatment.

Preferably, when a traditional dispersant is employed, the dispersant can be a random or structured polymeric dispersant. Preferred random polymers include acrylic polymer and styrene-acrylic polymers. Most preferred, however, are structured dispersants which include AB, BAB and ABC block copolymers, branched polymers and graft polymers. Some useful structured polymers are disclosed in U.S. Pat. No. 5,085,698, EP-A-0556649 and U.S. Pat. No. 5,231,131.

An important parameter in the practice of the present invention is the Frequency of the roughened interlayer surface onto which is to be printed an image. The Frequency of the roughened surface can be calculated using data obtained from profilometer data. In the practice of the present invention, a suitable Frequency is above 0.90 cycles/mm. It is preferable that the Frequency be in the range of from 0.90 cycles/mm to 3 cycles/mm. More preferably, the Frequency is in the range of from 1.0 to 2.9, and most preferably the Frequency is in the range of from 1.1 to 2.5 cycles/mm. Above the upper limit significant improvement in the image quality may not be observed. Below the lower limit, the image quality may be poor.

In another embodiment, the invention is a laminate comprising an image-bearing thermoplastic interlayer of the present invention. The interlayer can be laminated together with various transparent substrates such as, for example, glass or polycarbonate. Preferably, the image-bearing interlayer sheet is laminated between at least two sheets of glass. Other layers of interlayer can be positioned between the image-bearing interlayer and the glass, for example as in a glass/"conventional PVB"/"printed PVB"/glass laminate, wherein the printed PVB surface is in contact with the conventional PVB interlayer surface. Conventional laminating techniques are useful and effective in obtaining laminates of the present invention.

As a rule of thumb, the Applicants have found that the adhesion of an image-bearing laminate of the present invention can depend on the level of adhesion of the individual inks used to form the image, as well as the relative amount of each ink used in forming the image. For example, it can be expected that the adhesion of an image-bearing laminate of the present invention will be no lower than the lowest adhesion demonstrated by an individual ink in a given color set, and no higher than the highest adhesion demonstrated by an individual ink in that same ink set. Thus, a laminate of the present invention has adhesion which is a composite of the adhesion of the various inks used in the color set, and likely to be intermediate between the lowest and highest adhesion levels of the individual inks, depending on formulation.

The composite adhesion of a particular ink formulation suitable for use herein should be at least 6.895 MPa (1000 psi), as measured by a compressive shear test. If individual inks of a formulation do not exhibit adhesion of at least 1000 psi, a suitable laminate can still be obtained if they are not included in the formulation in an amount substantial enough to lower the composite adhesion to less than about 1000 psi. By way of illustration, consider an ink formulation "K" which includes individual inks A, B, C, and D - each having adhesion of 1500 psi, 1300 psi, 1200 psi, and 850 psi, respectively. An image-bearing laminate suitable for the practice of the present invention could still be obtained from K by preparing the formulation such that D is not included in an amount significant enough to lower the adhesion of the laminate. However, it is preferred that each ink in the ink formulation exhibit adhesion of at least about 1000 psi.

In any event, a laminate of the present invention has overall adhesive strength of at least 1000 psi, which is a level of adhesion suitable for safety glass applications. Preferably the adhesion is at least 1400 psi. More preferably, the adhesion of a laminate of the present invention is greater than or equal to 1500 psi, and even more preferably greater than or equal to 1700 psi. Most preferably the laminate has an adhesive strength of greater than or equal to 1800 psi.

Laminates of the present invention can be used in any application wherein conventional (that is, non-decorative) laminated glass is used. In addition to the conventional uses as safety glass, however, the laminates of the present invention can be used as decorative articles such as picture windows, decorative countertops, graphic art, image-bearing store-front windows, displays bearing company logos, advertising media, and/or any other use wherein a transparent laminate bearing an image can be desirable.

Laminates of the present invention can be obtained from the image-bearing interlayer and known materials useful for producing safety glass or windows, such as glass or polycarbonate, for example. Lamination of the interlayer to the other components can be accomplished using conventional lamination techniques. For example, an image-bearing interlayer can be laminated to glass by pressing the interlayer between two sheets of glass at an elevated temperature and pressure, under conditions by which air bubbles can be removed or prevented from being trapped in the laminate article.

In another embodiment, the present invention is an image-bearing interlayer sheet that has been printed on according to the process described herein. A printed interlayer sheet of the present invention can be laminated with other suitable interlayer materials, such as PET PUR and/or PVB, to obtain a stacked interlayer that can in turn be laminated with a suitable substrate of the present invention, such as glass or polycarbonate for example.

An image-bearing interlayer which can be obtained by a process comprising the step of feeding a substrate thermoplastic film through a conventional ink jet printer and ink-jet printing an image onto the surface of the film, and then laminating the image-bearing film with at least a second sheet of a thermoplastic interlayer material. The composite printed interlayer preferably has a thickness of from 30 to 60 mils. The other thermoplastic sheets can be: blank; bear printed images or solid colors; transparent, semi-transparent, opaque or any solid, translucent color such as red, green, blue, or white; otherwise visually distinct from the printing substrate.

### EXAMPLES

The following examples are presented to illustrate the invention. The examples are not intended to limit the scope of the invention in any manner. Together with the description of the invention and the teachings included herein, the Examples set forth the invention in such a manner that one of ordinary skill in the art would have a clear concept of the invention claimed herein.

### Test Methods

**Surface Roughness,** Rz, is determined from the 10 point average roughness as described in ISO-R468 and is expressed in microns. Surface roughness is measured using a Mahr Federal (Providence, RI) surfanalyzer. Surface Pattern Frequency is calculated from the surfanalyzer data by making a graph of the autocorrelation function vs. distance of the profilometer data. The autocorrelation data is analyzed by fast Fourier transform. The reported frequency of the surface pattern is the median frequency.

**Compressive Shear Adhesion Test:** Laminate adhesion (given in terms of compressive shear strength) is determined by the compressive shear test. The compressive shear strength is determined by sawing a laminate into six 2.54 cm x 2.54 cm chips. The chips are held in a jig at 45° and a compression testing instrument is used to place force on the chip at the rate of 0.25 cm/min. The amount of force to cause cohesive failure of the glass-PVB bond is the compressive shear strength of the laminate.

**Image Quality Test** Image quality was determined for each laminate by visually ranking the samples with respect to resolution and mottle.

**Accelerated Weathering Test** Laminates were prepared and the CIE L*, a*, b* color of the laminates was measured. The laminates were submitted for accelerated weathering according to the ASTM G90 cycle 2 protocol. The change in CIE L*, a*, b* color was measured as the samples returned from exposure. On average exposure to 480,000 langley corresponds to approximately 4 years of natural weathering.

### Printing/Lamination Process

The image of interest was ink jet printed onto the 30 mil thick interlayer using either commercially available or experimental inks. Prior to lamination the sheeting layers are conditioned to 27% RH for a minimum of 16 hours. For lamination, a layer of 15 mil clear interlayer is placed on the image bearing surface. A second 15 mil thick layer of interlayer was placed behind the image. The multi-layered structure is deaired either using a vacuum bag or nip roll process and autoclaved using standard lamination conditions. Once the laminate is autoclaved, the laminate is tested for adhesion using the compressive shear adhesion test. The results are given in Table 1 below. The laminate was also visually graded for image quality with respect to mottle and resolution. The results are given in Table 2 below.

### Examples 1-4

The ink was ink jet printed onto PVB using an Epson 3000 printer. The samples were air dried and laminated as described above.

Example 1. The ink formulations are given below:

| Color | Ink Formulations (weight percent) | | | |
|---|---|---|---|---|
| | Magenta | Yellow | Cyan | Black |
| Magenta Dispersion (7% pigment) | 36.08 | | | |
| Yellow Dispersion (7% pigment) | | 35.23 | | |
| Cyan Dispersion (5.5% pigment) | | | 28.35 | |
| Black Dispersion (7% pigment) | | | | 27.43 |
| Dowanol® DPM | 0.00 | 0.00 | 28.66 | 29.03 |
| Dowanol® DPMA (dipropylene glycol methy | 38.35 | 38.86 | 42.99 | 43.54 |
| Dowanol® DPnP (dipropylene glycol mono- | 25.57 | 25.91 | 0.00 | 0.00 |
| Total | 100.00 | 100.00 | 100.00 | 100.00 |

Example 2. The ink formulations are given below:

| Color | Ink Formulations (weight percent) | |
|---|---|---|
| | Magenta | Black |
| Magenta Dispersion (20% pigment) | 22.50 | |
| Black Dispersion (15% pigment) | | 18.10 |
| PUR 425/DPM | 22.50 | 22.50 |
| 2-Pyrrolodione | 15.00 | 17.00 |
| Isopropanol | 15.00 | 17.40 |
| Dowanol® DPM | 25.00 | 25.00 |
| Total | 100.00 | 100.00 |

Example 3. The ink formulation given below:

| Color | Ink Formulations (weight percent) |
|---|---|
| | Yellow |
| Yellow Dispersion (20% pigment) | 34.40 |
| Dowanol® DPMA (dipropylene glycol methy | 37.00 |
| Dowanol® DPnP (dipropylene glycol mono- | 24.60 |
| PVP/DPM | 4.00 |
| Total | 100.00 |

Example 4. The ink formulation is given below:

| Color | Ink Formulations (weight percent) |
|---|---|
| | Magenta |
| Magenta Dispersion (20% pigment) | 18.50 |
| PVP/VA 635 | 1.50 |
| Dowanol® DPM | 80.00 |
| Total | 100.00 |

Comparative Example 1. The ink was obtained commercially from Mimaki and the samples were printed on a JV3 ink jet printer.

Comparative Example 2. The ink formulations are given below:

| Color | Ink Formulations (weight percent) | | |
|---|---|---|---|
| | Magenta | Yellow | Cyan |
| Magenta Dispersion (15% pigment) | 28.5 | | |
| Yellow Dispersion (15% pigment) | | 28.5 | |
| Cyan Dispersion (15% pigment) | | | 22.5 |
| DI Water | 40.00 | 40.00 | 40.00 |
| Dowanol® DPM | 31.00 | 31.00 | 37.00 |
| PYK 348 | 0.50 | 0.50 | 0.50 |
| Total | 100.00 | 100.00 | 100.00 |

Comparative Example 3. The ink formulation is given below.

| Color | Ink Formulations (weight percent) Cyan |
|---|---|
| Cyan Dispersion (20% pigment) | 27.25 |
| Dowanol® DPM | 72.75 |
| Total | 100.00 |

**Table 1. Adhesion Results**

| Example | Color | %T | Adhesion, N/cm² | Adhesion, psi |
|---|---|---|---|---|
| 1 | Cyan | 82 | 1445 | 2096 |
| | Magenta | 84 | 1501 | 2178 |
| | Yellow | 94 | 1221 | 1772 |
| | Black | 72 | 1538 | 2232 |
| 2 | Magenta | 49 | 1473 | 2137 |
| | Black | 21 | 1288 | 1869 |
| 3 | Yellow | 91 | 1449 | 2102 |
| 4 | Magenta | 74 | 2026 | 2939 |
| C1 | Purple | 52 | 592 | 859 |
| | Green | 78 | 618 | 896 |
| | Black | 47 | 846 | 1228 |
| | Brown | 49 | 600 | 871 |
| C2 | Cyan | 72 | 570 | 827 |
| | Magenta | 71 | 875 | 1270 |
| | Yellow | 91 | 835 | 1211 |
| C3 | Cyan | 63 | 970 | 1408 |

Examples 5-7. The surface pattern on the sheeting used in Examples 5-7 and Comparative Examples 4 and 5 was generated by melt fracture. The surface pattern on the sheeting used in Comparative Example 7 was generated by embossing where the deairing channels are aligned in parallel rows as opposed to the more random deairing channels found on sheeting where the pattern was generated by melt fracture.

**Table 2. Image Quality Results**

| **Example** | **Image Quality** | | | |
|---|---|---|---|---|
| | Pattern Generation | Roughness | Frequency | Acceptability |
| 5 | Melt Fracture | 45 | 2.0 | Yes |
| 6 | Melt Fracture | 25 | 1.4 | Yes |
| 7 | Melt Fracture | 21 | 2.0 | Yes |
| C4 | Melt Fracture | 31 | 0.70 | No |
| C5 | Melt Fracture | 48 | 0.90 | No |
| C6 | Embossed | 50 | 3.5 | No |

The lightfastness testing was performed as described above. The delta E values for examples 8-18 are less than or equal to 8 after 480,000 langley of exposure. The pigments given in Comparative Examples 7-9 were unexpectedly found to have poor lightfastness.

**TABLE 3. Lightfastness Results**

| **Example** | **Pigment** | **Delta E 480 KLangley** |
|---|---|---|
| 8 | PY 120 | 2 |
| 9 | PY 155 | 3 |
| 10 | PY 128 | 3 |
| 11 | PY 180 | 8 |
| 12 | PY 95 | 6 |
| 13 | PY 93 | 4 |
| 14 | PV 19/PR 202 | 4 |
| 15 | PR 122 | 2 |
| 16 | PB 15:4 | 3 |
| 17 | PB 15:3 | 2 |
| 18 | PBI 7 | 0.7 |
| C7 | PY 14 | 67 |
| C8 | PY 110 | 19 |
| C9 | PY 139 | >70 |

## Claims

1. A process for obtaining an image-bearing laminate having a laminate adhesive strength of at least 6.895 MPa (1000 psi), the process comprising the steps: ink jet printing a digital Image, using a pigmented ink, onto at least one surface of a thermoplastic polymer Interlayer sheet to obtain an image-bearing thermoplastic polymer interlayer sheet; and laminating the image-bearing thermoplastic polymer interlayer sheet between sheets of transparent materials to obtain an image-bearing laminate, wherein the thermoplastic polymer interlayer sheet is selected from: polyvinyl butyral interlayer sheets, polyurethane interlayer sheets, and ethylene vinyl acetate interlayer sheets, and wherein the pigmented ink comprises at least one pigment selected from the group consisting of PY 120; PY 155; PY 128; PY 180; PY 95; PY 93; PV19/PR 202; PR 122; PB 15:4; PB 15:3; and PBI 7.

2. The process of Claim 1 wherein the printing process additionally comprises the step of jetting the pigmented ink onto a roughened interlayer surface, the surface having a roughness (R_{z}) of from 30 µm to 60 µm and a Frequency of greater than 0.9 cycles/mm, wherein the ink comprises a dispersant and optionally comprises a binder in either an aqueous or non-aqueous vehicle.

3. The process of Claim 1 or 2 wherein the viscosity of the ink is in the range of from. 1 mPas to 30 mPas measured at 25 °C, preferably 1 mPas to 12 mPas.

4. The process of Claim 1 or 2 wherein the ink comprises an aqueous or non-aqueous vehicle.

5. The process of Claim 4 wherein the pigment is dispersed in a vehicle having a water content of no more than 16 wt%.

6. The process of Claim 4 or 5 wherein the vehicle comprises an organic solvent selected from the group consisting of: propylene glycol ethers; ethylene glycol butyl ethers; dipropylene glycol monomethyl ether acetate; or mixtures of any of these.

7. The process of Claim 6 wherein the vehicle comprises dipropylene glycol monomethyl ether acetate.

8. The process of Claim 7 wherein the vehicle comprises dipropylene glycol monomethyl ether acetate and water.

9. The process of Claim 6 wherein the ink comprises a dispersant but no binder.

10. The process of Claim 9 wherein the dispersant comprises a structured polymer.

11. The process of Claim 6 wherein the ink comprises a dispersant and a binder.

12. The process of Claim 11 wherein the dispersant comprises: AB, BAB and ABC block copolymers, branched polymers and graft polymers.

13. The process of Claim 11 wherein the binder is selected from binders in the group consisting of: polyurethane; polyvinyl pyrolidone/polyvinyl acetate; polyvinyl pyrolidone: and mixtures of any of these.

14. The process of any of claims 1 to 13 wherein the interlayer is the polyvinyl butyral interlayer sheet.

15. The process of Claim 14 wherein the image is printed using a drop on demand ink jet printing process.

16. The process of Claim 15 wherein the drop on demand process is a piezo electric process.

17. The process of Claim 15 wherein the drop on demand process is a thermal ink jet printing process.

18. The process of Claim 14 wherein the image is printed using a continuous drop ink jet printing process.

19. A decorative laminate obtainable by a process according to any of Claims 1 to 18.

20. The laminate of Claim 19 wherein the image-bearing interlayer is laminated between two sheets of glass.

21. A thermoplastic polymer interlayer sheet bearing an image on at least one surface of the thermoplastic polymer interlayer sheet, the image being printed on said interlayer sheet by a process comprising the step of jetting either an aqueous or solvent-based pigmented ink onto a roughened interlayer surface, the surface having a roughness (R_{z}) of from 30 µm to 60 µm and a Frequency of greater than 0.9 cycles/mm, wherein the thermoplastic polymer interlayer sheet is selected from: polyvinyl butyral interlayer sheets, polyurethane interlayer sheets, and ethylene vinyl acetate interlayer sheets, wherein the pigmented ink comprises at least one pigment selected from the group consisting PY 120; PY 155; PY 128; PY 180: PY 95; PY 93; PV19/PR 202; PR 122; PB 15:4; PB 15:3; and PBI 7; and wherein the ink has a viscosity of from to 1 mPas to 30 mPas measured at 25°C, and
wherein the ink comprises a dispersant and optionally comprises a binder.

22. The interlayer of Claim 21 wherein the interlayer is the polyvinyl butyral interlayer sheet.

## Patentansprüche

1. Verfahren für das Erhalten eines bildtragenden Laminats, das eine Laminathaftfestigkeit von mindestens 6,895 MPa (1000 psi) aufweist, wobei das Verfahren folgende Schritte umfasst: Tintenstrahldrucken eines Digitalbilds unter Anwendung einer pigmentierten Tinte auf mindestens eine Fläche eines aus thermoplastischem Polymer bestehenden Zwischenblatts, um ein bildtragendes, aus thermoplastischem Polymer bestehendes Zwischenblatt zu erhalten; und Laminieren des bildtragenden, aus thermoplastischem Polymer bestehenden Zwischenblatts zwischen Blätter von transparenten Materialen, um ein bildtragendes Laminat zu erhalten, wobei das aus thermoplastischem Polymer bestehende Zwischenblatt ausgewählt wird unter: Polyvinylbutyralzwischenblättern, Polyurethanzwischenblättem und Ethylenvinylacetatzwischenblättern und wobei die pigmentierte Tinte mindestens ein Pigment umfasst, ausgewählt aus der Gruppe bestehend aus PY 120; PY 155; PY 128; PY 180; PY 95; PY 93; PV 19/PR 202; PR 122; PB 15:4; PB 15:3 und PBI 7.

2. Verfahren nach Anspruch 1, wobei das Druckverfahren zusätzlich den Schritt des strahlförmigen Auftragens der pigmentierten Tinte auf eine aufgeraute Zwischenfläche umfasst, wobei die Fläche eine Rauhigkeit (R_{z}) von 30 µm bis 60 µm und eine Frequenz von mehr als 0,9 Zyklen/mm aufweist, wobei die Tinte ein Dispergiermittel und wahlweise ein Bindemittel in entweder einem wässrigen oder einem nichtwässrigen Vehikel umfasst.

3. Verfahren nach Anspruch 1 oder 2, wobei die Viskosität der Tinte im Bereich von 1 mPas bis 30 mPas, bei 25°C gemessen, bevorzugt 1 mPas bis 12 mPas, beträgt.

4. Verfahren nach Anspruch 1 oder 2, wobei die Tinte ein wässriges oder nichtwässriges Vehikel umfasst.

5. Verfahren nach Anspruch 4, wobei das Pigment in einem Vehikel dispergiert ist, das einen Wassergehalt von nicht mehr als 16 Gew.% aufweist.

6. Verfahren nach Anspruch 4 oder 5, wobei das Vehikel ein organisches Lösungsmittel umfasst ausgewählt aus der Gruppe bestehend aus: Propylenglykolethern; Ethylenglykolbutylethern; Dipropylenglykolmonomethyletheracetat oder Mischungen irgendwelcher derselben.

7. Verfahren nach Anspruch 6, wobei das Vehikel Dipropylenglykolmonomethyletheracetat umfasst.

8. Verfahren nach Anspruch 7, wobei das Vehikel Dipropylenglykolmonomethyletheracetat und Wasser umfasst.

9. Verfahren nach Anspruch 6, wobei die Tinte ein Dispergiermittel, jedoch kein Bindemittel, umfasst.

10. Verfahren nach Anspruch 9, wobei das Dispergiermittel ein strukturiertes Polymer umfasst.

11. Verfahren nach Anspruch 6, wobei die Tinte ein Dispergiermittel und ein Bindemittel umfasst.

12. Verfahren nach Anspruch 11, wobei das Dispergiermittel: AB-, BAB- und ABC-Blockcopolymere, verzweigte Polymere und Pfropfpolymere umfasst.

13. Verfahren nach Anspruch 11, wobei das Bindemittel unter Bindemitteln in der Gruppe ausgewählt ist bestehend aus: Polyurethan; Polyvinylpyrrolidon/Polyvinylacetat; Polyvinylpyrrolidon; und Mischungen irgendwelcher derselben.

14. Verfahren nach einem der Ansprüche 1 bis 13, wobei die Zwischenschicht das aus Polyvinylbutyral bestehende Zwischenblatt ist.

15. Verfahren nach Anspruch 14, wobei das Bild durch ein Drop-on-Demand-Tintenstrahldruckverfahren gedruckt wird.

16. Verfahren nach Anspruch 15, wobei das Drop-on-Demand-Verfahren ein piezoelektrisches Verfahren ist.

17. Verfahren nach Anspruch 15, wobei das Drop-on-Demand-Verfahren ein thermisches Tintenstrahldruckverfahren ist.

18. Verfahren nach Anspruch 14, wobei das Bild mit Hilfe eines kontinuierlichen Tropfentintenstrahldruckverfahrens gedruckt wird.

19. Dekoratives Laminat, erhältlich durch ein Verfahren nach einem der Ansprüche 1 bis 18.

20. Laminat nach Anspruch 19, wobei die bildtragende Zwischenschicht zwischen zwei Glasscheiben laminiert wird.

21. Aus thermoplastischem Polymer bestehendes Zwischenblatt, das ein Bild auf mindestens einer Oberfläche des aus thermoplastischem Polymer bestehenden Zwischenblatts trägt, wobei das Bild auf das Zwischenblatt durch ein Verfahren aufgedruckt wird umfassend den Schritt des strahlförmigen Auftragens einer pigmentierten Tinte auf der Basis von entweder Wasser oder einem Lösungsmittel auf eine aufgeraute Zwischenfläche, wobei die Fläche eine Rauhigkeit (R_{z}) von 30 µm bis 60 µm und eine Frequenz von mehr als 0,9 Zyklen/mm aufweist, wobei das aus thermoplastischem Polymer bestehende Zwischenblatt unter Folgenden ausgewählt wird: Polyvinylbutyralzwischenblättern, Polyurethanzwischenblättem und Ethylenvinylacetatzwischenblättern, wobei die pigmentierte Tinte mindestens ein Pigment umfasst ausgewählt aus der Gruppe bestehend aus PY 120; PY 155; PY 128; PY 180; PY 95; PY 93; PV19/PR 202; PR 122; PB 15:4; PB 15:3 und PBI 7; und wobei die Tinte eine Viskosität von 1 mPas bis 30 mPas, bei 25°C gemessen, und wobei die Tinte ein Dispergiermittel und wahlweise ein Bindemittel umfasst.

22. Zwischenschicht nach Anspruch 21, wobei die Zwischenschicht das Polybutyralzwischenblatt ist.

## Revendications

1. Procédé pour obtenir un stratifié porteur d'image ayant une adhérence de 6,895 MPa (1000 psi), le procédé comprenant les étapes suivantes : impression par jet d'encre d'une image numérique, en utilisant une encre pigmentée, sur au moins une surface d'une feuille intermédiaire de polymère thermoplastique pour obtenir une feuille intermédiaire de polymère thermoplastique porteuse d'image ; et application de la feuille intermédiaire de polymère thermoplastique porteuse d'image entre des feuilles de matériaux transparents pour obtenir un stratifié porteur d'image, dans lequel la feuille intermédiaire de polymère thermoplastique est choisie parmi des feuilles intermédiaires de polyvinylbutyral, des feuilles intermédiaires de polyuréthanne et des feuilles intermédiaires d'éthylène et d'acétate de vinyle, et dans lequel l'encre pigmentée comprend au moins un pigment choisi dans le groupe constitué des pigments PY 120 ; PY 155 ; PY 128 ; PY 180 ; PY 95 ; PY 93 ; PV19/PR 202 ; PR 122 ; PB 15:04 ; PB 15:3 ; et PBI 7.

2. Procédé selon la revendication 1, dans lequel le procédé d'impression comprend en plus l'étape de projection de l'encre pigmentée sur une surface intermédiaire rugueuse, la surface ayant une rugosité (R_{z}) de 30 µm à 60 µm et une fréquence de plus de 0,9 cycle/mm, dans lequel l'encre comprend un dispersant et comprend éventuellement un liant dans un véhicule aqueux ou non aqueux.

3. Procédé selon la revendication 1 ou 2, dans lequel la viscosité de l'encre se situe dans la plage de 1 mPas à 30 mPas mesurée à 25 °C, de préférence de 1 à 12 mPas.

4. Procédé selon la revendication 1 ou 2, dans lequel l'encre comprend un véhicule aqueux ou non aqueux.

5. Procédé selon la revendication 4, dans lequel le pigment est distribué dans un véhicule ayant une teneur en eau ne dépassant pas 16 % en poids.

6. Procédé selon la revendication 4 ou 5, dans lequel le véhicule comprend un solvant organique choisi dans le groupe constitué d'éthers de propylèneglycol ; de butyléthers d'éthylèneglycol ; d'acétate monométhyléther de dipropylèneglycol ; ou de mélanges de n'importe lesquels de ceux-ci.

7. Procédé selon la revendication 6, dans lequel le véhicule comprend un acétate monométhyléther de dipropylèneglycol.

8. Procédé selon la revendication 7, dans lequel le véhicule comprend un acétate monométhyléther de dipropylèneglycol et de l'eau.

9. Procédé selon la revendication 6, dans lequel l'encre comprend un dispersant, mais pas de liant.

10. Procédé selon la revendication 9, dans lequel le dispersant comprend un polymère structuré.

11. Procédé selon la revendication 6, dans lequel l'encre comprend un dispersant et un liant.

12. Procédé selon la revendication 11, dans lequel le dispersant comprend : des copolymères séquencés AB, BAB et ABC, des polymères ramifiés et des polymères greffés.

13. Procédé selon la revendication 11, dans lequel le liant est choisi parmi les liants du groupe constitué du polyuréthanne ; de polyvinylpyrrolidone/poly(acétate de vinyle) ; de polyvinyl-pyrrolidone ; et de mélanges de ceux-ci.

14. Procédé selon une des revendications 1 - 13, dans lequel la couche intermédiaire est la feuille intermédiaire de polyvinylbutyral.

15. Procédé selon la revendication 14, dans lequel l'image est imprimée à l'aide d'un procédé d'impression à jet d'encre de gouttes à la demande.

16. Procédé selon la revendication 15, dans lequel le procédé de gouttes à la demande est un procédé piézoélectrique.

17. Procédé selon la revendication 15, dans lequel le procédé de gouttes à la demande est un procédé d'impression à jet d'encre thermique.

18. Procédé selon la revendication 14, dans lequel l'image est imprimée à l'aide d'un procédé d'impression à jet d'encre à gouttes continues.

19. Stratifié décoratif pouvant être obtenu par un procédé selon l'une quelconque des revendications 1 à 18.

20. Stratifié selon la revendication 19, dans lequel la couche intermédiaire porteuse d'image est appliquée entre deux feuilles de verre.

21. Feuille intermédiaire de polymère thermoplastique porteuse d'image sur au moins une surface de la feuille intermédiaire de polymère thermoplastique, l'image étant imprimée sur ladite feuille intermédiaire par un procédé comprenant l'étape de projection d'une encre pigmentée aqueuse ou à base de solvant sur une surface intermédiaire rugueuse, la surface ayant une rugosité (R_{z}) de 30 µm à 60 µm et une fréquence de plus de 0,9 cycle/mm, dans laquelle la feuille intermédiaire de polymère thermoplastique est choisie parmi des feuilles intermédiaires de polyvinylbutyral, des feuilles intermédiaires de polyuréthanne et des feuilles intermédiaires d'éthylène et d'acétate de vinyle, dans laquelle l'encre pigmentée comprend au moins un pigment choisi dans le groupe constitué des pigments PY120 ; PY155 ; PY128 ; PY180 ; PY 95 ; PY 93 ; PV19/PR 202 ; PR 122 ; PB 15:4 ; PB 15:3 ; et PBI 7 ; dans laquelle l'encre a une viscosité de 1 mPas à 30 mPas mesurée à 25 °C et dans laquelle l'encre comprend un dispersant et comprend éventuellement un liant.

22. Couche intermédiaire selon la revendication 21, dans laquelle la couche intermédiaire est la feuille intermédiaire de polyvinylbutyral.
